# NOUVEAU FASCICULE DE BREVET EUROPEEN

(11) **EP 1 656 517 B2**
(45) Date de publication et mention de la décision concernant l'opposition: **13.10.2021**
(45) Mention de la délivrance du brevet: 15.02.2012
(21) Numéro de dépôt: 04786274.3
(22) Date de dépôt: 06.08.2004
(51) Int. Cl.: F16L 11/12

(54) **METHODE D'EVACUATION DES GAZ DE PERMEATION D'UNE CONDUITE TUBULAIRE FLEXIBLE ET CONDUITE ADAPTEE A SA MISE EN OEUVRE**
VERFAHREN ZUM ENTFERNEN VON PERMEATGASEN AUS EINEM FLEXIBLEN ROHR UND ZUR DURCHFÜHRUNG DESSELBEN AUSGESTALTETES ROHR
METHOD FOR REMOVAL OF PERMEATE GASES FROM A FLEXIBLE TUBULAR PIPE AND PIPE EMBODIED FOR CARRYING OU THE SAME

(30) Priorité: 14.08.2003 FR 0309954
(43) Date de publication de la demande: 17.05.2006
(73) Titulaire: Technip France, 92400 Courbevoie (FR)
(72) Inventeur: FELIX-HENRY, Antoine, F-76000 Rouen (FR)
(74) Mandataire: Fédit-Loriot
(86) Numéro de dépôt international: PCT/FR2004/002101
(87) Numéro de publication internationale: WO 2005/019715

(56) Documents cités:
- WO-A-00/17479
- AU-B2- 624 373
- US-A- 4 315 408
- US-A- 4 450 711
- US-A- 5 072 622
- US-A- 6 039 083
- US-A1- 2003 056 845
- US-B1- 6 634 388
- American Petroleum Institute: "Recommended Practice for Flexible Pipe", March 2002 (2002-03)
- American Petroleum Institute: "Specification for Unbonded Flexible Pipe", November 1999 (1999-11)
- "Nitrogen Removal from Natural Gas. Phase II Draft Final Report under Contract Number DE-AC21 95MC32199-02 for the US Department of Energy (DOE)", Membrane Technology and Research , 22 December 1999 (1999-12-22), Retrieved from the Internet: URL:http://www.osti.gov/bridge/servlets/pu rl/780455-PcnOK0/webviewable/780455.pdf

## Description

La présente invention se rapporte à une méthode de drainage et d'évacuation des gaz de perméation diffusant dans l'annulaire d'une conduite tubulaire flexible et à une conduite adaptée à la mise en œuvre d'une telle méthode.

Les conduites tubulaires flexibles ici concernées sont les conduites non liées telles que décrites dans la norme « American Petroleum Institute » (API), spécification 17J, à laquelle on pourra se reporter.

Ces conduites tubulaires flexibles utilisées dans le domaine de l'exploitation pétrolière en mer sont destinées au transport des fluides et notamment des hydrocarbures. Elles comprennent au moins un tube interne flexible en matériau polymère, plus communément dénommé gaine interne de pression, dans lequel s'écoulent lesdits hydrocarbures. Les conduites comportent une gaine externe et des nappes de renfort, ou armatures, situées dans la zone annulaire, entre la gaine externe et la gaine interne de pression.

Les conduites peuvent comporter une carcasse disposée à l'intérieur de la gaine de pression en fonction de leur destination et notamment en fonction de leurs conditions de service et du fluide transporté.

De surcroît, elles sont susceptibles de comporter une gaine, dite gaine intermédiaire située dans la zone annulaire.

Bien que la gaine interne de pression soit étanche aux hydrocarbures, un certain nombre de gaz et de molécules que ces hydrocarbures contiennent sont susceptibles de diffuser à travers la paroi de ladite gaine de pression en fonction, du matériau qui la constitue, de la concentration desdits gaz et molécules dans les hydrocarbures et des conditions locales, notamment de pression et de température. Ces gaz qui diffusent à travers la paroi de la gaine interne de pression et que l'on dénommera gaz de perméation, comprennent notamment de l'eau en phase vapeur, du dioxyde de carbone, du méthane ou du sulfure d'hydrogène.

Ladite zone annulaire qui comprend la ou les armatures, ou nappes de renfort, comporte des chemins de passages, ou chemins d'écoulement, qui s'étendent, par exemple, autour des éléments de l'armature et le long de ladite gaine interne de pression sur toute la longueur de la conduite, lesdits gaz de perméation étant susceptibles de circuler naturellement dans lesdits chemins de passage pour être drainés vers un dispositif d'évacuation. Le plus souvent, le dispositif d'évacuation est situé dans les embouts de connexion et il est formé d'une ou de plusieurs soupapes différentielles. Les chemins de passage sont, par exemple, formés par les jeux existant entre les fils d'armure des nappes de renfort ou des nappes d'armure, ou encore, grâce aux faces latérales des fils de nappes qui sont profilées ou rainurées longitudinalement et qui même en contact sont adaptées à former lesdits chemins de passage.

Un double problème se pose alors. Non seulement les gaz de perméation sont susceptibles de corroder les éléments de l'armature qui sont généralement en acier, mais l'eau en phase vapeur est aussi susceptible de se condenser à partir de certaines conditions de température et de pression pour former un mélange liquide qui obstrue les chemins de passage et peut bloquer la circulation naturelle des gaz de perméation. De la sorte, la pression des gaz de perméation augmente dans la zone annulaire et ils stagnent entre les éléments de l'armature, en particulier le dioxyde de carbone et le sulfure d'hydrogène qui accentue plus encore la corrosion.

En outre, l'accumulation de gaz de perméation et de condensat dans la zone annulaire est également susceptible de provoquer l'éclatement du revêtement extérieur qui protège l'armature et la gaine interne de pression, dès lors que la pression dans la zone annulaire est supérieure à la pression régnant à l'extérieur de la conduite. Ce risque est moindre à grande profondeur puisque la pression hydrostatique compense la pression de la zone annulaire, en revanche il est maximal à proximité de la surface lorsque les gaz de perméation ne sont plus évacués.

Ce problème de condensation peut notamment être critique dans les configurations de colonne montante (riser), dites en S ou en vague (Lazy-S, Steep-S). En effet, la condensation dans la partie haute de la conduite vient se concentrer au point d'inflexion bas de la conduite (sag bend) empêchant le drainage naturel dans la partie basse de la conduite, de s'effectuer le long de la conduite vers l'embout terminal de surface.

Afin d'éviter que les gaz de perméation ne s'accumulent dans ladite zone annulaire, il a été imaginé de percer des orifices dans le revêtement extérieur et d'obturer ces orifices par des soupapes à ouverture et fermeture rapides agencées pour s'ouvrir et de refermer à des pressions différentielles déterminées entre la zone annulaire et l'extérieur. Ainsi, lorsque la pression du gaz de perméation dans la zone annulaire est supérieure auxdites pressions différentielles déterminées, les soupapes s'ouvrent pour libérer le gaz de perméation vers l'extérieur, et se referment rapidement pour que rien ne pénètre dans la zone annulaire. Il est en effet déterminant qu'aucun fluide ne pénètre dans la zone annulaire, en particulier l'eau de mer lorsque la conduite tubulaire flexible relie une tête de puits sous-marine et une plate-forme de surface.

On se référera notamment au document EP 0 341 144 qui décrit un tel dispositif d'évacuation des gaz de perméation, disposé dans un embout de connexion terminal d'une conduite.

Toutefois, d'une part il subsiste toujours un risque que les soupapes restent en position ouverte alors que la pression de la zone annulaire est inférieure à la pression extérieure, auquel cas de l'eau est susceptible de pénétrer à l'intérieure de la zone annulaire, et d'autre part, à grande profondeur, la pression extérieure est telle que les soupapes ne peuvent s'ouvrir aisément et que les gaz de perméation se condensent alors dans la zone annulaire.

Ainsi, il a été imaginé de laisser les gaz de perméation se condenser et de réinjecter le condensat à l'intérieure de la gaine interne de pression où circule l'hydrocarbure. Un tel procédé est décrit dans le document WO 00/17479.

Cependant, un tel procédé nécessite des moyens de pompage relativement puissants et éventuellement adaptés à être immergés.

Un problème qui se pose et que vise à résoudre la présente invention, est alors de préserver la conduite tubulaire flexible en évitant non seulement que les gaz de perméation puissent se condenser dans la zone annulaire, mais aussi que l'eau extérieure puisse y pénétrer.

Dans ce but, la présente invention propose une méthode de drainage et d'évacuation des gaz de perméation d'une conduite tubulaire flexible pour le transport des hydrocarbures selon la revendication 1. Ladite conduite tubulaire flexible comporte au moins une gaine interne de pression, adaptée à véhiculer lesdits hydrocarbures, des gaz de perméation contenus dans lesdits hydrocarbures étant susceptibles de diffuser à travers la paroi de la gaine interne de pression. La conduite tubulaire flexible comprend un revêtement de protection, ou gaine externe, et une ou plusieurs nappes de renfort ou armatures de renforcement situés dans une zone annulaire, entre la gaine externe et la gaine interne de pression. Ladite zone annulaire comporte des chemins de passage le long des nappes de renfort, adaptés à drainer les gaz de perméation vers des moyens d'évacuation et dans lesquels lesdits gaz de perméation sont susceptibles de circuler ; ladite méthode consistant à forcer la circulation desdits gaz de perméation dans ladite zone annulaire, à travers lesdits chemins de passage vers lesdits moyens d'évacuation qui évacuent les gaz à l'extérieur de ladite zone annulaire.

Avantageusement, les moyens d'évacuation sont constitués de soupapes différentielles situées dans les embouts de connexion terminaux, qui évacuent les gaz par différence de pression entre ladite zone annulaire et l'extérieur.

Ainsi, une caractéristique de l'invention réside dans le mode de drainage et d'évacuation des gaz de perméation de la zone annulaire qui n'est plus passif, contrairement aux conduites selon l'art antérieur, mais actif puisque l'on effectue l'évacuation des gaz de perméation vers l'extérieur en forçant la circulation du gaz dans la zone annulaire.

De la sorte, non seulement la pression partielle des gaz de perméation agressifs vis-à-vis des éléments de l'armature, est fortement diminuée puisque ces gaz de perméation sont chassés desdits chemins de passage et évacués vers l'extérieur, mais surtout, l'eau en phase vapeur ne condense plus car elle est entraînée également avec les autres gaz de perméation vers l'extérieur avant que la pression partielle n'atteigne la pression de vapeur saturante et elle n'obstrue donc plus les chemins de passage de la zone annulaire.

En conséquence, la conduite tubulaire flexible est préservée et d'autre part le revêtement extérieur n'est plus sujet à l'éclatement. En effet, ce drainage actif forcé des gaz de perméation permet de réduire la corrosion des éléments métalliques et d'éviter la condensation desdits gaz et donc les problèmes d'éclatement potentiels de la gaine externe lié à des surpressions locales dues à ladite condensation.

La diffusion des gaz de perméation est, de manière préférentielle, forcée en injectant sous pression dans lesdits chemins de passage, un gaz d'entraînement adapté à entraîner lesdits gaz de perméation dans lesdits chemins de passage vers l'extérieur de ladite zone annulaire. Ainsi, le drainage ou l'évacuation s'effectuent par injection d'un gaz neutre vis-à-vis des éléments d'armature et des gaz de perméation, à une pression et un débit adaptés à préserver le revêtement extérieur et à entraîner mécaniquement lesdits gaz de perméation à travers les chemins de passage vers des moyens d'évacuation, connus en soi qui les expulsent à l'extérieur de la zone annulaire.

Le gaz d'entraînement est avantageusement injecté dans une pluralité de zones d'injection espacées longitudinalement dans ladite conduite tubulaire flexible de façon à obtenir une circulation suffisante en gaz d'entraînement en tout point de la conduite tubulaire pour entraîner les gaz de perméation le long des nappes de renfort, vers les moyens d'évacuation. Dans le cas d'une conduite tubulaire sous-marine montante (riser, en langue anglaise), les moyens d'évacuation sont de préférence uniques et situés dans l'extrémité qui rejoint la surface. D'autres sorties, sont susceptibles d'être ménagées, sous-marine celle-là, au niveau des embouts de connexion. Ces sorties sont formées par des soupapes différentielles montées sur les embouts de connexion

Selon l'invention, on injecte ledit gaz d'entraînement à l'une des extrémités de ladite conduite tubulaire flexible, à celle qui est reliée à une installation sous-marine située dans le fond de la mer et les gaz de perméation sont entraînés dans l'annulaire le long des nappes de renfort vers l'autre extrémité située au voisinage de la surface, puis évacués à travers lesdits moyens d'évacuation des embouts.

Le gaz d'entraînement est préférentiellement constitué d'azote, ce gaz étant disponible à un coût relativement avantageux et complètement neutre vis-à-vis des gaz de perméation et de l'armature.

Selon un autre mode de mise en œuvre de l'invention, complémentaire ou alternatif, la circulation est crée par aspiration desdits gaz de perméation dans au moins une zone d'aspiration de ladite zone annulaire afin de créer une circulation forcée desdits gaz de perméation. Ainsi, les gaz de perméation sont extrait de la zone annulaire par dépression vis-à-vis de l'extérieur ce qui diminue également la pression partielle des différents gaz dans la zone annulaire par rapport aux procédés de l'art antérieur et permet donc également d'empêcher la condensation des gaz de perméation dans les conduites tubulaires.

La conduite tubulaire flexible comprend des moyens pour forcer la circulation des gaz de perméation dans la zone annulaire à travers lesdits chemins de passage vers les moyens d'évacuation.

Avantageusement, lesdits moyens pour forcer la circulation desdits gaz de perméation, comprennent au moins un conduit d'alimentation en gaz d'entraînement sous pression débouchant dans ladite zone annulaire pour entraîner et forcer la circulation des gaz de perméation dans lesdits chemins de passage vers des moyens d'évacuation débouchant à l'extérieur.

Ainsi, le conduit d'alimentation qui est flexible également et monté attenant à ladite conduite tubulaire ou à l'intérieur, débouche dans la zone annulaire pour injecter sous pression le gaz d'entraînement à travers les chemins de passage de manière à entraîner les gaz de perméation vers la sortie et à l'extérieur.

Par ailleurs, le conduit d'alimentation présente, avantageusement des orifices d'injection percés espacés les uns des autres, et il est étendu longitudinalement dans ladite zone annulaire de façon à former une pluralité de zones d'injection espacées longitudinalement dans ladite conduite tubulaire flexible. De la sorte, grâce à un seul conduit d'alimentation percé de proche en proche d'une pluralité d'orifices d'injection et qui est étendu sur toute la longueur de la conduite tubulaire, on forme une pluralité de zones d'injection sur toute la longueur de la conduite. Ainsi, la zone annulaire de l'intégralité de la conduite tubulaire, d'une extrémité à l'autre est balayée par le gaz d'entraînement qui force la circulation des gaz de perméation et les entraîne vers les moyens d'évacuation.

La conduite tubulaire flexible comprend un premier embout terminal raccordé à une installation sous-marine qui est, elle-même reliée à au moins une tête de puits et un second embout terminal situé au voisinage de la surface et ladite sortie débouche avantageusement à l'extérieur au voisinage dudit second embout terminal, ledit conduit d'alimentation qui présente au moins une extrémité d'injection, étant étendu dans ladite conduite tubulaire à l'intérieur de l'espace annulaire de façon que ladite extrémité d'injection soit située sensiblement au voisinage du premier embout terminal.

Ainsi, l'extrémité d'injection, au voisinage dudit premier embout terminal, injecte le gaz d'entraînement qui est susceptible de forcer la circulation des gaz de perméation dans la zone annulaire, jusqu'audit second embout terminal. De la sorte, grâce à ladite extrémité d'injection, seule ou en complément des orifices d'injection percés le long du conduit d'alimentation qui permettent de pallier les pertes de charges le long de la conduite tubulaire, tous les gaz de perméation qui diffusent à travers la gaine interne de pression sont susceptibles d'être entraînés vers la sortie.

En outre, la diffusion des gaz de perméation vers la sortie est forcée grâce à une source d'alimentation en azote sous pression. Avantageusement, l'azote est stocké sous pression dans un réservoir de stockage.

Selon un autre mode de mise en œuvre de l'invention, la diffusion desdits gaz de perméation est forcée au moyen d'une pompe d'aspiration adaptée à aspirer lesdits gaz de perméation dans lesdits chemins de passage dans au moins une zone d'aspiration de ladite zone annulaire.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique partielle en perspective illustrant une conduite tubulaire flexible adaptée à la mise en en œuvre de la Méthode de drainage et d'évacuation des gaz de perméation conforme à l'invention ;
- la Figure 2 est une vue schématique en coupe selon II-II de la conduite tubulaire illustrée sur la Figure 1 ; et,
- la Figure 3 est une vue schématique en perspective d'un élément de la conduite tubulaire illustré sur les Figures 1 et 2.

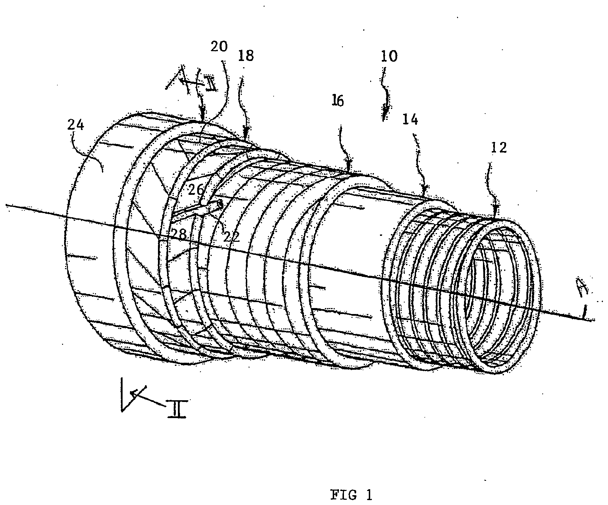

La Figure 1 illustre la structure d'une conduite tubulaire flexible, dont une portion 10 est ici représentée.

La conduite illustrée comprend, de l'intérieur vers l'extérieur, une première couche 12 constituée d'un enroulement métallique agrafé susceptible de résister à l'écrasement de la gaine de pression (14) qui la recouvre, sous des contraintes externes.

Une deuxième couche étanche 14 flexible, formant un tube interne flexible dénommée gaine de pression qui est réalisée dans un matériau plastique du type polymère, apte à résister à l'action chimique des hydrocarbures, recouvre la première couche 12.

Cette gaine de pression 14 est recouverte par une voûte de pression 16 formant une troisième couche, adaptée à résister aux contraintes radiales crées par la pression du fluide circulant dans la conduite. La voûte de pression 16 est constituée par un enroulement en hélice à pas court, avec un angle d'enroulement voisin de 90° avec l'axe de la conduite A autour de ladite gaine de pression 14, d'un ou plusieurs fils de forme métalliques agrafés.

La voûte de pression 16 est à son tour recouverte par deux nappes d'armures 18, 20 enroulées l'une sur l'autre à pas long et dans les deux sens d'enroulement opposés de manière à être croisées. Ces deux nappes d'armures 18, 20, formées d'enroulements de plusieurs fils, généralement de section sensiblement rectangulaire et formant une quatrième et une cinquième couche, sont enroulées avec un certain jeu et elles permettent à cette dernière de reprendre les contraintes axiales longitudinales qui s'exercent sur la conduite et permettent notamment de résister à la traction.

Entre les éléments formant les nappes d'armures 18, 20, une portion de conduit 22 apparaît sur la Figure 1, ledit conduit 22, inséré entre les fils d'armure d'une des nappes d'armure, est destiné à la mise en œuvre de l'invention comme on va l'expliquer ci-après.

Les nappes d'armures 18, 20 sont également recouvertes par une sixième couche d'un revêtement de protection externe 24, constituée d'une gaine d'étanchéité en matériau plastique du type polymère.

Ainsi, la gaine de protection externe 24 et la gaine interne de pression 14 située concentriquement à l'intérieur, définissent ensemble une zone annulaire 23 dans laquelle les deux nappes d'armures 18, 20 et la voûte de pression 16 forment les nappes de renfort, ou armatures de renforcement. Les nappes d'armures 18, 20 et la voûte de pression 16 sont adaptées à se déplacer relativement entre elles pour assurer la flexibilité de la conduite. En outre, les fils des nappes d'armures définissent entre eux des espaces formant chemins de passage dans lesquels un fluide est susceptible de circuler. Ces espaces, non représentés qui apparaissent entre les fils des nappes d'armures, de section rectangulaire, sont susceptibles d'être ménagés et élargis en prévoyant des fils dont les parois latérales sont profilées, par exemple concaves ou convexes, de façon à définir nécessairement entre deux fils joints au moins un chemin de passage longitudinal.

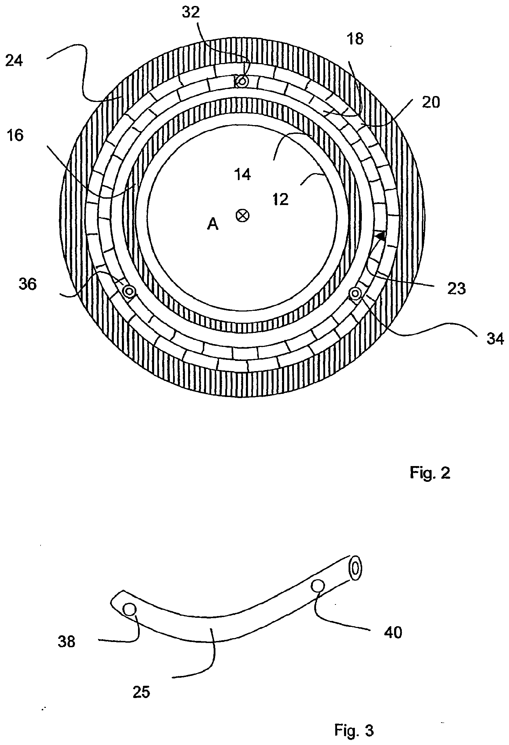

Tel que représenté sur la Figure 1, la portion de conduit 22 constitue l'extrémité d'un conduit d'alimentation 25 que l'on retrouve en partie sur la Figure 3 et qui est réalisé de préférence en acier inoxydable.

Selon un mode préféré de mise en œuvre de l'invention, la conduite tubulaire flexible comporte au moins un conduit d'alimentation destiné à l'injection d'un gaz d'entraînement pour forcer la circulation des gaz de perméation dans la zone annulaire à travers les chemins de passage.

La portion 10 de conduite tubulaire flexible illustrée sur la Figure 1 comporte un conduit qui est enroulé en hélice entre deux fils d'armure 26, 28 de la même nappe d'armure 18.

Alors que la conduite tubulaire flexible dont la portion 10 est illustrée sur la Figure 1, comporte un seul conduit, la section d'une conduite tubulaire telle qu'illustrée sur la Figure 2, qui pourrait être vue selon le plan II-II de la Figure 1, présente quant à elle 3 conduits d'alimentation en coupe, 32, 34, 36.

Ces trois conduits d'alimentation 32, 34, 36, sont également enroulés en hélice entre les fils d'armure de la nappe d'armures 18 que l'on retrouve également illustrée avec les autres couches.

Les conduits d'alimentation, 25, 32, 34, 36 sont destinés à être sous pression d'un gaz d'entraînement, avantageusement de l'azote, de façon à alimenter la zone annulaire 23 pour forcer une circulation de gaz dans ladite zone.

Pour ce faire et ainsi que l'illustre la Figure 3, le conduit d'alimentation 25 est percé localement, d'orifices d'injection 38, 40 formant buse, à travers lesquels le gaz d'entraînement, l'azote, est adapté à diffuser sous pression.

Ainsi, les conduits d'alimentation 25, 32, 34, 36 qui sont étendus tout le long de la conduite tubulaire flexible sont susceptibles d'alimenter en gaz d'entraînement la zone annulaire 23 localement ou sur toute la longueur de ladite conduite entre ses deux extrémités, lequel gaz d'entraînement circule dans les chemins de passages vers l'une ou l'autre desdites extrémités.

Ainsi, grâce à ce mode de mise en œuvre, des gaz de perméation qui diffusent à travers la gaine de pression 14, dans la zone annulaire 23, sont entraînés à l'une ou l'autre desdites extrémités par le gaz d'entraînement.

De la sorte, on maintient la pression partielle en vapeur d'eau dans l'annulaire en dessous de la pression de vapeur saturante, ainsi non seulement ces gaz de perméation qui contiennent de l'eau en phase vapeur ne condensent pas, mais en plus ils sont entraînés en dehors de la zone annulaire 23, ce qui réduit la corrosion de l'armature de renforcement qui est généralement constituées d'enroulements métalliques. Outre de l'eau, les gaz de perméation contiennent également du sulfure d'hydrogène et du dioxyde de carbone qui contribuent à la corrosion des nappes de renfort.

Le nombre de conduits 25, 32, 34, 36, leur dimension ainsi que le nombre et la position des orifices d'injection 38, dépendent du type de conduite et des conditions de champs et de service.

Selon l'invention, on injecte les gaz d'entraînement dans la partie basse de la conduite tubulaire flexible, de préférence à travers au moins deux conduits d'alimentation. Selon un mode particulier de mise en œuvre de l'invention, pour une conduite tubulaire flexible montante (riser, en langue anglaise) de 10 pouces, soit environ 25 cm de diamètre, qui s'étend sur 700 m de long pour rejoindre le fond de la mer à 350 m, le pétrole brut étant à 130°C sous 240 bars de pression, le débit d'injection en gaz d'entraînement doit être ajusté de façon à assurer un débit d'environ 1 litre par heure, par exemple 0,8 litre, au niveau des moyens d'évacuation pour éviter la condensation des gaz de perméation.

Des conduites tubulaires flexibles mises en œuvre dans la méthode conforme à l'invention sont installées entre une installation sous-marine reliée à des têtes de puits, à laquelle elles sont reliées par un premier embout terminal et qui est située au fond de la mer ou de l'océan, et une plate-forme en surface. Les conduits d'alimentation font partie intégrante de la conduite et ils sont alimentés en gaz d'entraînement, depuis la surface grâce à un réservoir d'azote sous pression ou à une pompe. L'extrémité de la zone annulaire située au niveau du premier embout terminal qui est raccordée à la tête de puits, est parfaitement étanche de sorte que l'azote sous pression tend à remonter vers la surface et déboucher vers les moyens d'évacuation situés près de l'extrémité supérieure au niveau d'un second embout terminal, à l'extérieur de ladite zone annulaire, en entraînant avec lui les gaz de perméation.

Selon un autre mode de mise en œuvre de l'invention, le gaz d'entraînement est amenée directement au niveau du premier embout terminal situé sur l'installation sous-marine, grâce à un autre conduit d'alimentation externe à la conduite tubulaire flexible, par exemple un ombilical relié à l'installation sous-marine, qui permettra l'injection du gaz d'entraînement dans la zone annulaire au niveau de ladite installation.

Cette méthode de drainage et d'évacuation des gaz de perméation selon l'invention est transposable aux conduites flexibles existantes dans lesquelles, les gaz de perméation circulent librement dans la zone annulaire, pour forcer le drainage de ces gaz vers l'extérieur et par exemple à travers des soupapes (vent port, en langue anglaise) disposées le long de la conduite flexible, généralement dans les embouts de connexion.

En outre, dans certains cas, la conduite flexible est susceptible de comporter au moins une gaine intermédiaire définissant deux annulaires, un annulaire externe et un annulaire interne. Dans ce cas des conduits d'alimentation sont installés à la fois dans l'annulaire interne qui sera drainé par circulation forcée en priorité et dans l'annulaire externe.

Par ailleurs, l'accroissement de la température et de la pression entraîne une plus forte diffusion des gaz à travers la gaine interne de pression, si bien que la méthode conforme à l'invention est parfaitement adaptée à l'extraction à grande profondeur où les hydrocarbures sont dans des conditions de température et de pression importantes.

Selon un autre mode de mise en œuvre de l'invention non représenté, la circulation forcée des gaz dans l'annulaire est effectuée par aspiration et non plus par injection. On aspire donc les gaz de perméation directement dans la zone annulaire au moyen d'une pompe située par exemple en surface sur la platte-forme, de façon à abaisser la pression partielle des différents gaz contenus dans les gaz de perméation et en particulier de l'eau en phase vapeur pour éviter qu'elle ne condense.

## Revendications

1. Méthode de drainage et d'évacuation des gaz de perméation d'une conduite tubulaire flexible montante non liée adaptée à être installée entre une installation sous-marine et une plateforme en surface, notamment pour le transport des hydrocarbures, ladite installation sous-marine étant située au fond de la mer, ladite conduite tubulaire flexible comportant au moins une gaine interne de pression (14) adapté à véhiculer lesdits hydrocarbures, des gaz de perméation contenus dans lesdits hydrocarbures étant susceptibles de diffuser à travers la paroi de ladite gaine interne de pression (14), et comportant une gaine externe (24) et une ou plusieurs nappes de renfort (16, 18, 20) situées dans une zone annulaire (23) comprise entre ladite gaine externe (24) et ladite gaine interne de pression (14), ladite zone annulaire (23) présentant des chemins de passage le long desdites nappes de renfort et dans lesquels lesdits gaz de perméation sont susceptibles de circuler vers des moyens d'évacuation, un gaz d'entraînement étant susceptible de s'écouler dans ladite zone annulaire (23) ;
**caractérisée en ce que** ledit gaz d'entraînement est injecté sous pression dans ladite zone annulaire à l'une des extrémités de ladite conduite tubulaire flexible reliée à ladite installation sous-marine pour forcer la circulation desdits gaz de perméation dans lesdits chemins de passage vers l'autre extrémité située au voisinage de la surface et vers lesdits moyens d'évacuation, tandis que lesdits moyens d'évacuation sont adaptés à évacuer lesdits gaz de perméation en dehors de ladite zone annulaire (23) vers l'extérieur de ladite conduite tubulaire flexible.

2. Méthode de drainage et d'évacuation des gaz de perméation selon la revendication 1, **caractérisée en ce qu'**on amène ledit gaz d'entraînement par un conduit d'alimentation externe à la conduite tubulaire.

3. Méthode de drainage et d'évacuation des gaz de perméation selon la revendication 1, **caractérisée en ce qu'**on injecte ledit gaz d'entraînement dans une pluralité de zones d'injection espacées longitudinalement dans ladite zone annulaire de ladite conduite tubulaire flexible.

4. Méthode de drainage et d'évacuation des gaz de perméation selon l'une quelconque des revendications 1 à 3, **caractérisée en ce qu'**on injecte un gaz contenant de l'azote.

## Patentansprüche

1. Verfahren zum Entfernen und zur Ableitung der Permeatgase aus einer unverbundenen flexiblen aufsteigenden Rohrleitung, die für die Installation zwischen einer Unterwasseranlage und einer Oberflächenplattform, insbesondere für den Transport der Kohlenwasserstoffe ausgebildet ist, wobei die Unterwasseranlage am Boden des Meeres angeordnet ist, wobei die flexible Rohrleitung mindestens eine innere Druckhülle (14) beinhaltet, die für ein Führen der Kohlenwasserstoffe ausgebildet ist, wobei in den Kohlenwasserstoffen enthaltene Permeatgase durch die Wandung der inneren Druckhülle (14) hindurch diffundieren können, und eine äußere Umhüllung (24) und eine oder mehrere Verstärkungsmatten (16, 18, 20) beinhaltet, die in einer ringförmigen Zone (23) zwischen der äußeren Umhüllung (24) und der inneren Druckhülle (14) angeordnet sind, wobei die ringförmige Zone (23) Durchführungswege entlang der Verstärkungsmatten aufweist, und in denen die Permeatgase zu Ableitungsmitteln zirkulieren können, wobei ein Antriebsgas in der ringförmigen Zone (23) strömen kann;
**dadurch gekennzeichnet, dass** das Antriebsgas unter Druck in die ringförmige Zone an einem der Enden der flexiblen Rohrleitung, welches mit der Unterwasseranlage verbunden ist, injiziert wird, um die Zirkulation der Permeatgase in den Durchführungswegen in Richtung des anderen Endes, welches sich in der Nähe der Oberfläche befindet, und in Richtung zu den Ableitungsmitteln zu erzwingen, während die Ableitungsmittel dafür ausgebildet sind, die Permeatgase aus der ringförmigen Zone (23) hinaus in Richtung der Außenseite der flexiblen Rohrleitung abzuleiten.

2. Verfahren zum Entfernen und zur Ableitung der Permeatgase nach Anspruch 1, **dadurch gekennzeichnet, dass** das Antriebsgas durch eine Versorgungsleitung außerhalb der Rohrleitung zugeführt wird.

3. Verfahren zum Entfernen und zur Ableitung der Permeatgase nach Anspruch 1, **dadurch gekennzeichnet, dass** das Antriebsgas in eine Vielzahl von Injektionszonen injiziert wird, die in der ringförmigen Zone der flexiblen Rohrleitung in Längsrichtung beabstandet sind.

4. Verfahren zum Entfernen und zur Ableitung der Permeatgase nach einem der Ansprüche 1 bis 3, **dadurch gekennzeichnet, dass** ein Gas injiziert wird, das Stickstoff enthält.

## Claims

1. Method for draining and venting the permeate gases from a riser flexible tubular pipe suitable for being installed between a submarine installation and a surface platform, especially one for transporting hydrocarbons, said submarine installation being located on the seabed, said flexible tubular pipe comprising at least one internal pressure sheath (14) suitable for conveying said hydrocarbons, permeate gases contained in said hydrocarbons being liable to diffuse through the wall of said internal pressure sheath (14), and comprising an external sheath (24) and one or more reinforcing plies (16, 18, 20) located in an annular region (23) lying between said external sheath (24) and said internal pressure sheath (14), said annular region (23) having, along said reinforcing plies, flow paths in which said permeate gases can flow towards venting means, an entrainment gas being capable of flowing through said annular region (23),
**characterised in that** said entrainment gas is injected under pressure into said annular region at one of the ends of said flexible tubular pipe connected to said submarine installation in order to force said permeate gases to flow along said flow paths towards the other end located close to the surface and towards said venting means, whereas said venting means are suitable for venting said permeate gases out of said annular region (23) towards the outside of said flexible tubular pipe.

2. Method of draining and venting the permeate gases according to Claim 1, **characterised in that** said entrainment gas is injected via a supply line external to the tubular pipe.

3. Method of draining and venting the permeate gases according to Claim 1, **characterised in that** said entrainment gas is injected into a plurality of injection regions spaced apart longitudinally in said annular region of said flexible tubular pipe.

4. Method of draining and venting the permeate gases according to any one of Claims 1 to 3, **characterised in that** a nitrogen-containing gas is injected.
